## Europäisches Patentamt
## European Patent Office
## Office européen des brevets

(19)

(11) Veröffentlichungsnummer: **0 089 053**
**B1**

(12) # EUROPÄISCHE PATENTSCHRIFT

(45) Veröffentlichungstag der Patentschrift:
**04.06.86**

(21) Anmeldenummer: **83102525.9**

(22) Anmeldetag: **15.03.83**

(51) Int. Cl.⁴: **A 01 B 35/18, A 01 B 63/22,
A 01 B 61/04, A 01 B 35/30**

(54) **Bodenbearbeitungsgerät.**

(30) Priorität: **15.03.82 US 358121**

(43) Veröffentlichungstag der Anmeldung:
**21.09.83 Patentblatt 83/38**

(45) Bekanntmachung des Hinweises auf die Patenterteilung:
**04.06.86 Patentblatt 86/23**

(84) Benannte Vertragsstaaten:
**DE FR GB SE**

(56) Entgegenhaltungen:
**CA - A - 913 445
CA - A - 1 105 762
CA - A - 1 112 110
FR - A - 2 342 014
US - A - 3 706 345
US - A - 3 757 871
US - A - 4 004 640
US - A - 4 066 132
US - A - 4 185 699**

(73) Patentinhaber: **DEERE & COMPANY, 1 John Deere
Road, Moline Illinois 61265 (US)**

(72) Erfinder: **Jensen, Thomas Carl, 304, N.W. Beechwood,
Ankeny Iowa 50021 (US)**

(74) Vertreter: **Fricke, Joachim, Dr. et al, Dr. R. Döring, Dr. J.
Fricke, Patentanwälte Josephspitalstrasse 7,
D-8000 München 2 (DE)**

## Beschreibung

Die Erfindung betrifft ein Bodenbearbeitungsgerät mit den Merkmalen des Oberbegriffs des Anspruchs 1. Ein solches Gerät ist aus der US-A-37 57 871 bekannt. Die Scheiben oder dergleichen Werkzeuge der vorderen Sätze 20 schneiden die Stroh- oder dgl. Erntegutreste klein und zwar im Bereich vor den pflugscharähnlichen Werkzeugen, die durch die obere Bodenschicht hindurchgreifen und den Boden aufreissen und öffnen, so dass Luft und Wasser eintreten können. Dieses Bodenbearbeitungsgerät lässt die Oberfläche des Bodens offen und vermischt das Erdreich mit den Strohresten oder dgl., so dass diese schneller zu Humus zerfallen. Ausserdem hält sich die Feuchtigkeit besser in den oberen Bodenschichten, was die Wurzelbildung der nachfolgenden Kulturen fördert. Auch wird die Winderosion in engen Grenzen gehalten. Bei dem bekannten Bodenbearbeitungsgerät sind die Sätze mit die Erntegutreste zerkleinernden Werkzeugen an einem eigenen Rahmen abgestützt, dessen vorderes Ende federnd nachgiebig mit der Deichsel verbunden ist und der an seinem rückwärtigen Ende mit dem vorderen Ende des Hauptrahmens über eine Verstell- und Schwenkeinrichtung verbunden ist. Die pflugscharähnlichen Werkzeuge sind jeweils über ihre Trageinrichtungen an dem Hauptrahmen befestigt, der über Laufräder am Boden abgestützt ist wobei der Abstand zwischen den Laufrädern und dem Hauptrahmen über einen hydraulischen Zylinder verändert werden kann. Die pflugscharähnlichen Werkzeuge sind an ihren Halterungen federnd abgestützt, so dass sie eine vorbestimmte Eingriffstiefe aufrechterhalten, gegenüber Hindernissen aber in vorbestimmter Weise elastisch ausweichen können.

Pflugscharähnliche Werkzeuge mit ihren Halterungen, wie sie bei einem Bodenbearbeitungsgerät der gattungsgemässen Art eingesetzt werden können, sind auch aus der US-A-42 75 792 bekannt.

Bei dem eingangs genannten und bei anderen bekannten Bodenbearbeitungsgeräten dieser Art sind die an den vorderen Trageinrichtungen angeordneten Sätze mit die Erntegutreste zerkleinernden Werkzeugen gegenüber dem zusätzlichen Rahmen und gegenüber dem Hauptrahmen relativ starr angeordnet. Lediglich das vordere Ende des zusätzlichen Rahmens weist eine gewisse nachgiebige Verschwenkbarkeit gegenüber der Deichsel des Bodenbearbeitungsgerätes auf. Durch die starre Verbindung zwischen den beiden Rahmen in der einjustierten Arbeitsstellung wird der Hauptrahmen dann, wenn die Werkzeuge der vorderen Sätze durch Bodenhindernisse angehoben werden ebenfalls angehoben oder teilweise von seinem Gesicht entlastet, so dass die rückwärtigen pflugscharähnlichen Werkzeuge nicht mehr bis zu der gewünschten Eindringtiefe in den Boden eingreifen. Der vordere Rahmen ist in Draufsicht etwa trapezförmig ausgebildet während der rückwärtige Rahmen aus drei im gegenseitigen Abstand angeordneten quer verlaufenden Trageinrichtungen besteht, die durch drei parallel zur Fahrtrichtung angeordnete Längsstreben starr miteinander verbunden sind. Aufgrund der grossflächigen Ausbildung des Rahmens und der beschriebenen Schwierigkeiten ist es kaum möglich eine gleichmässige Vorspannung auf alle Werkzeuge aufrechtzuerhalten. Damit ergeben sich relativ ungleichmässige Arbeitsergebnisse. Man muss daher ein relativ hohes Gesamtgewicht auf die Werkzeuge zur Einwirkung bringen, was wiederum die einzelnen Lager erheblich belastet und frühzeitig zerstört. Auch lassen sich bei derartigen Hauptrahmen und zusätzlichen Rahmen, die gegeneinander verstellt werden müssen, nur relativ kleine Arbeitsbreiten verwirklichen, da das seitliche Anbringen von schwenkbaren Auslegern zu weiteren Schwierigkeiten führt.

Es ist Aufgabe der Erfindung, ein Bodenbearbeitungsgerät mit den Merkmalen des Oberbegriffs des Anspruchs 1 so weiterzubilden, dass die aufgezeigten Schwierigkeiten vermieden werden, so dass auch bei grosser Arbeitsbreite und grosser flächiger Ausdehnung der Rahmen und auch bei schwierigen Bodenverhältnissen die einzelnen Werkzeuge und Werkzeugsätze mit gleichbleibender Vorspannung und damit optimaler Wirkung eingesetzt werden können, ohne dass die Lager z.B. der Scheibensätze gewichtsmässig übermässig belastet werden müssen. Diese Aufgabe wird durch die Merkmale des Anspruchs 1 gelöst.

Aufgrund dieser Ausbildung kann die Eingriffstiefe der pflugscharähnlichen Werkzeuge leicht durch Veränderung der Höhenlage des Hauptrahmens über der Bodenoberfläche eingestellt werden. Da die die Erntegutreste zerkleinernden Werkzeuge mit einer Vorspannung am Boden angreifen, die von der Höhenlage des Hauptrahmens über der Bodenoberfläche unabhängig ist, braucht bei Verstellung der Höhenlage des Hauptrahmens eine Verstellung der vorderen Werkzeugsätze gegenüber dem Hauptrahmen nicht vorgenommen zu werden. Dies wird wesentlich begünstigt dadurch, dass der wirksame Vorspannbereich der Vorspanneinrichtung für die vorderen Werkzeugsätze dem Arbeitstiefenbereich der rückwärtigen Werkzeuge entspricht. Damit wird erreicht, dass die vorderen Werkzeugsätze jeweils für sich mit optimaler Vorspannung am Erdboden und an dem auf dem Erdboden liegenden Erntegutresten angreifen und diese zerkleinern können. Unabhängig davon kann die Eindringtiefe und damit die Funktion der pflugscharähnlichen Werkzeuge wesentlich genauer und gleichförmiger eingestellt werden. Eine relative Verstellung von den unterschiedlichen Werkzeugsätzen zugeordneten Rahmenteilen ist dazu nicht erforderlich. Die genauere Einstellmöglichkeit für die jeweilige Vorspannung der Werkzeuge ermöglicht es den Hauptrahmen insgesamt leichter zu halten, so dass die Drehlager der Werkzeuge weniger stark belastet und dem Verschleiss unterworfen sind.

Vorteilhafterweise ist die Anordnung nach Anspruch 2 ausgebildet. Dadurch wird erreicht, dass die Werkzeuge jedes vorderen Werkzeugsatzes stets mit der gewünschten gleichförmigen Vorspannkraft auf die am Boden liegenden Erntegutreste einwirken und bis zu einer vorbestimmten geringen Tiefe in den Boden eindringen können, und zwar unabhängig von Boden- oder Geländeunebenheiten und unabhängig davon, in welcher relativen Schwenkstellung sich der Arm gegenüber dem Tragglied befindet. Die einzelnen vorderen Werkzeugsätze können unabhängig voneinander Bodenunebenheiten ausweichen, ohne dass die Vorspannung und die Eingriffstiefe der übrigen Werkzeuge beeinflusst oder beeinträchtigt wird. Auch kann die Eingriffstiefe der pflugscharähnlichen Werkzeuge in weiten Grenzen verändert werden, ohne dass sich die Arbeitscharakteristik der Werkzeuge der vorderen Sätze verändert.

Die Unterteilung der vorderen Werkzeuge in kleine Gruppen ist dabei vorteilhaft. Die Anordnung kann dabei zweckmässigerweise gemäss Anspruch 3 getroffen werden, wobei die für die Vorspannung wesentlichen geometrischen Verhältnisse besonders günstig bei der Weiterbildung nach Anspruch 4 sind.

Die gesamte Anordnung von Werkzeugen zeigt eine hohe Elastizität und gewährleistet eine gleichmässige Arbeitsleistung und Effektivität insb. auch bei rauhem Terrain und sich wesentlich ändernden Bodenverhältnissen, ohne dass Beschädigungen an den Werkzeugen zu befürchten sind.

Die Ansprüche 6 bis 11 betreffen vorteilhafte Einzelheiten der Ausbildung und Vorspannung der Trag- und Vorspanneinrichtungen für die vorderen Werkzeugsätze.

Die neue Ausbildung gestattet es die vorderen Sätze ebenso wie die rückwärtigen Sätze gleichermassen an dem in sich starren Hauptrahmen anzubringen, wobei die vorderen Trageinrichtungen an auswählbaren Stellen des Hauptrahmens oder eines dessen Breite seitlich vergrössernden Ergänzungsrahmens befestigt werden können. Dies vergrössert wesentlich die Einsatzmöglichkeit und Anpassungsmöglichkeit des Bodenbearbeitungsgerätes in Bezug auf verschiedene Arbeitsverhältnisse und -bedingungen. Die dazu notwendigen Massnahmen sind Gegenstand des Anspruchs 12. Die Ansprüche 13 bis 15 geben dazu vorteilhafte Weiterbildungen und Ergänzungen. Diese zielen darauf, den Hauptrahmen leicht und doch stabil auszubilden mit der Möglichkeit die Gewichtsverteilung auf dem Hauptrahmen zu korrigieren und die Höhenlage des Hauptrahmens gegenüber dem Boden leicht und genau einstellen zu können.

Die Erfindung wird nachfolgend anhand schematischer Zeichnungen an einem Ausführungsbeispiel näher erläutert.

Es zeigen:
Figur 1 eine Draufsicht eines Bodenbearbeitungsgerätes nach der Erfindung in einer Grundausführung.

Figur 2 eine rückwärtige Ansicht, teilweise im Schnitt, eines Satzes von scheibenartigen Werkzeugen.

Figur 3 die Anordnung nach Fig. 2 in Seitenansicht.

Figur 4 in Rückansicht einen Satz von Scheibenpflügen.

Figur 5 eine Seitenansicht der Anordnung nach Fig. 4.

Figur 6 in perspektivischer und auseinandergezogener Darstellung den Hauptrahmen und die zugehörige Hubeinrichtung des Bodenbearbeitungsgerätes nach Fig. 1.

Figur 7 eine Seitenansicht der Hubeinrichtung und des zugehörigen Ausgleichsgestänges, wobei sich der Hauptrahmen in einer Arbeitsstellung befindet.

Figur 8 eine ähnliche Darstellung wie Fig. 7 bei in die Transportstellung angehobenem Hauptrahmen.

Figur 9 in Draufsicht den rechtsseitigen Abschnitt eines Bodenbearbeitungsgerätes ähnlich dem nach Fig. 1, wobei jedoch der Hauptrahmen mit Werkzeugsätzen von insgesamt schmalerer Arbeitsbreite ausgerüstet ist.

Figur 10 in ähnlicher Darstellung wie Fig. 9 den Hauptrahmen in Verbindung mit einem flexibel schwenkbaren Auslegerrahmen.

Figur 11 in Draufsicht ein weiter abgewandeltes Ausführungsbeispiel für die Verwendung des Bodenbearbeitungsgerätes in Verbindung mit einem Auslegerrahmen.

Figur 12 in Draufsicht eine Vorrichtung ähnlich der nach Figur 1, wobei jedoch statt scheibenartigen Zerkleinerungswerkzeugen Scheibenpflugsätze eingesetzt sind.

Figur 13 eine abgewandelte Anordnung im Vergleich zu der Anordnung nach Fig. 12.

Figur 14 in perspektivischer Darstellung einen Abschnitt des rückwärtigen Bereiches der Vorrichtung nach Fig. 1 zur Veranschaulichung der aushebbaren Bodenbearbeitungseinrichtungen mit den zugehörigen schweren Federvorspanneinrichtungen und

Figur 15 die Ansicht eines kofferartigen Zusatzgewichtes mit Blickrichtung entsprechend der Pfeile 15–15 der Figur 1.

Das Bodenbearbeitungsgerät 10 weist einen starren, allgemein rechteckförmigen Hauptrahmen 12 auf, der zwecks Vorwärtsbewegung über ein Feld durch der Höhe nach einstellbare Radanordnungen 14 unterstützt ist. Eine Deichsel 16 ist mit dem vorderen Bereich des Hauptrahmens 12 verbunden und umfasst eine Zugverbindung 18, die an einen Ackerschlepper oder ein anderes Zugfahrzeug angeschlossen werden kann. Der Vorderbereich des Hauptrahmens 12 unterstützt mehrere in Querrichtung in Abständen angeordnete, Erntegutreste zerkleinernde Werkzeugsätze 20. Der rückwärtige Bereich des Hauptrahmens 12 unterstützt mehrere Bodenbearbeitungswerkzeuge 22, die in den Erdboden eindringen und den Boden teilweise zur Abdeckung der durch die Werkzeugsätze 20 zerkleinerten Erntegutreste anhebt. Die Bodenbearbeitungswerkzeuge 22 sind vorzugsweise tief greifende Bodenbearbeitungswerkzeuge, z.B. Meisselpflugschaufeln, welche typischerweise 15 bis 30 cm in den Boden eindringen.

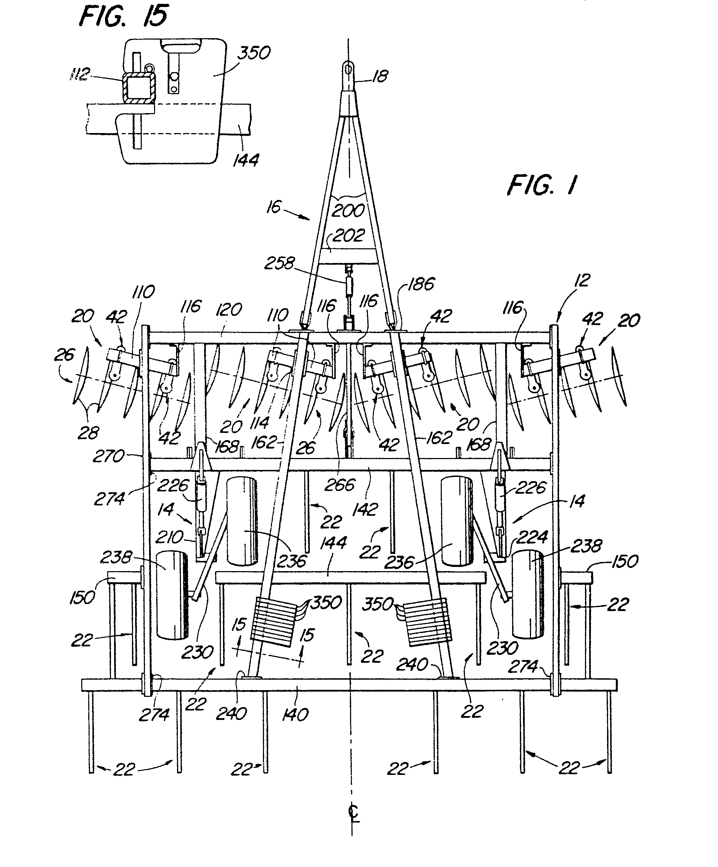

Die zerkleinernden Werkzeugsätze 20 umfassen vorzugsweise Scheibensätze 26 (Fig. 1 bis 3) mit mehreren schalenförmigen Scheiben 28. In der bevorzugten Ausführungsform sind wenigstens vier Scheiben vorgesehen, jedoch nicht mehr als neun Scheiben, die in Querrichtung auf einem Satzbolzen 30 mit Abstandsstücken 32 unterstützt werden, so dass die einzelnen Scheiben in entsprechend gegenseitigen Abständen gehalten werden. Der Satz 26 ist durch Lager 34 drehbar unterstützt. Die Lager sind an den unteren Enden von Armen 36 unterstützt, die von einem rechteckförmigen Satzrohr 40 nach unten ragen. Das Satzrohr 40 wiederum wird von dem vorderen Bereich des Hauptrahmens 12 durch mehrere federnde Halterungen 42 unterstützt. Diese ermöglichen es dem Satz 26 nach rückwärts und nach oben gegenüber dem Hauptrahmen 12 über einen Höhenbereich zu verschwenken, während ein konstanter, nach unten gerichteter Druck auf den Satz 26 gegen den Boden ausgeübt wird, wenn sich der Rahmen in seiner Arbeitsstellung befindet.

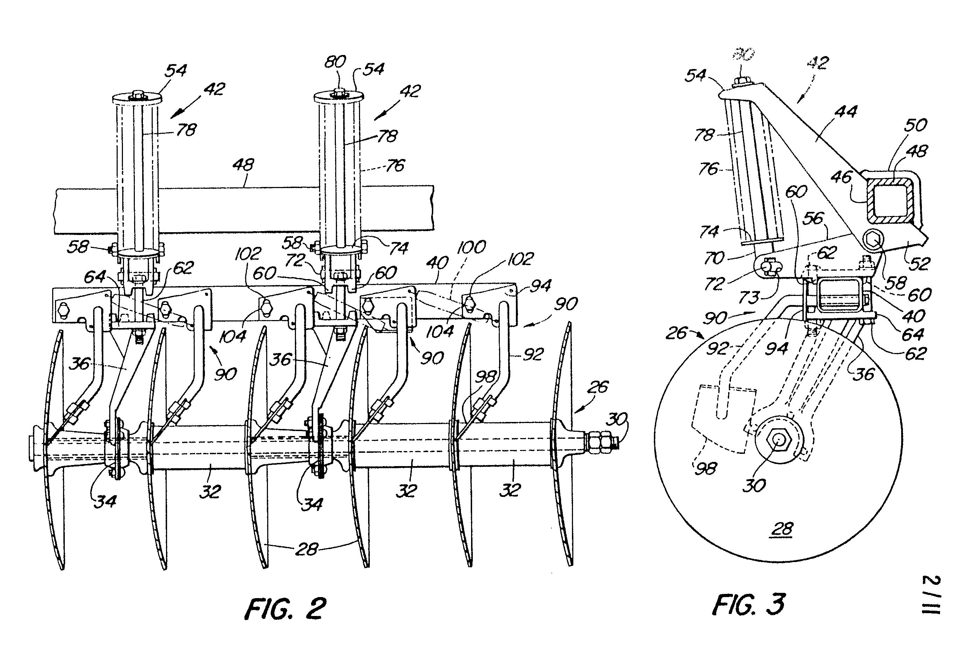

Die federnden Halterungen 42 umfassen nach rückwärts sich öffnende, kanalförmige Haupthalter 44. Diese weisen eine vordere rechtwinkelige Ausnehmung 46 auf, in die ein Rohr 48 von rechteckförmigem Querschnitt eingreift, das mit dem Hauptrahmen 12 verbindbar ist. Ein U-förmiger Bolzen 50 ist an dem Rohr 48 und dem Haupthalter 44 festgezogen, um den Halter an der gewünschten Stelle zu sichern. Der Haupthalter 44 weist einen unteren Abschnitt 52 auf, der sich unterhalb des Hauptrahmens 12 erstreckt. Der Haupthalter 44 erstreckt sich von dem Rohr 48 nach rückwärts und nach oben bis zu einem mit einer Öffnung versehenen Federwiderlager 54, die nach vorne und nach unten schräggestellt ist. Ein sich von vorne nach hinten erstreckender Schwenkhalter 56 ist mit seinem vorderen Ende über einen Querzapfen 58 an dem unteren Bereich 52 des Haupthalters 44 angelenkt. Der untere Bereich des Schwenkhalters 56 umfasst nach unten ragende Ohren oder Lappen 60, die gemäss Fig. 3 den oberen oberen Abschnitt des Satzmontagerohres 40 aufnimmt. Zwei Verbindungsbolzen 62 erstrecken sich zwischen jeweils zwei Lappen 60 nach unten und zwar beiderseits entgegengesetzter Flächen des Satzrohres 40. Die Bolzen 62 greifen durch eine Platte 64 am oberen Ende des Armes 36. Die Bolzen 62 werden festgezogen, um die Platte 64 gegen die allgemein horizontale Unterseite des Satzrohres 40 festzuziehen und den oberen Abschnitt des Satzrohres gegen den Boden des Schwenkhalters zu sichern. Das Satzrohr 40 liegt unterhalb und hinter dem Schwenkzapfen 58. Wenn der Schwenkhalter 56 nach oben schwenkt, schwenkt das Satzmontagerohr 40 nach rückwärts und nach oben.

Der Schwenkhalter 56 erstreckt sich von dem Verbindungsbereich an dem Satzrohr 40 nach hinten zu einer Verbindungsstelle mit einem schwenkbaren Federhalter 70. Der Federhalter oder das Federlager 70 umfasst einen Schwenkzapfen 72, der sich quer nach aussen durch Öffnungen 73 an den entgegengesetzten Seiten des Schwenkhalters 56 erstreckt. Der Schwenkhalter umfasst ausserdem eine nach oben gerichtete Federanlagefläche 74. Eine schwere Schraubenfeder 76 ist zwischen den Federwiderlagern 54 und 74 eingespannt und zusammengepresst. Ein Zugglied oder Bolzen 78 ist durch die Öffnung in der Fläche 54 hindurchgefädelt und in das Federlager 70 eingeschraubt. Der Bolzen 78 umfasst einen Kopf oder eine vergrösserte Oberfläche 80, die verhindert, dass der Bolzen nach unten durch die Öffnung in der Fläche 54 gleitet. Der Bolzen 78 hält die Feder in zusammengedrücktem Zustand und begrenzt die nach unten gerichtete Schwenkbewegung des Schwenkhalters 56. In der Ausführungsform nach Fig. 3 ist die Öffnung 73 geschlitzt, so dass das Federlager zur Veränderung des wirksamen Momentarmes, durch den die Feder zur Vorspannung des Schwenkhalters 56 nach unten wirksam ist, um den Satz 26 gegen den Boden zu drängen, zu verändern. Der Stift 72 ist geringfügig unterhalb des Schwenkzapfens 58 angeordnet und vor der Federwiderlagerfläche 54. Wenn also der Satz 26 nach oben ausgehoben wird, nimmt anfänglich der Momentarm, durch den die Feder 76 wirksam ist, zu, während anschliessend der Momentarm wieder abnimmt. Der effektive Momentarm, durch den die rückwärtigen und nach oben gerichteten Kräfte am Satz 26 angreifen, in Verbindung mit dem effektiven Momentarm des Schwenkhalters 56, über den die Druckfeder 76 wirksam ist, wirken mit dem Gewicht des Satzes von Werkzeugen 20 so zusammen, dass ein allgemein konstanter, nach unten gerichteter Druck auf den Satz 26 wirksam ist, wenn dieser zwischen seiner untersten, durch die Länge des Zuggliedes 78 bestimmten Lage und seiner obersten Stellung verschwenkt wird, welche in der bevorzugten Ausführungsform etwa 20 cm oberhalb der untersten Stellung liegt. In der bevorzugten Ausführungsform ist der durchschnittliche Arbeitsbereich des Satzes 26 annähernd zentriert zwischen der obersten und untersten Stellung. Obwohl die Kurve des nach unten gerichteten Druckes auf den Satz aufgetragen gegenüber der Schwenkstellung des Satzes allgemein konstant ist, führt die Auslösegeometrie zu einem geringfügigen Spitzendruck in dem durchscnittlichen Arbeitsbereich.

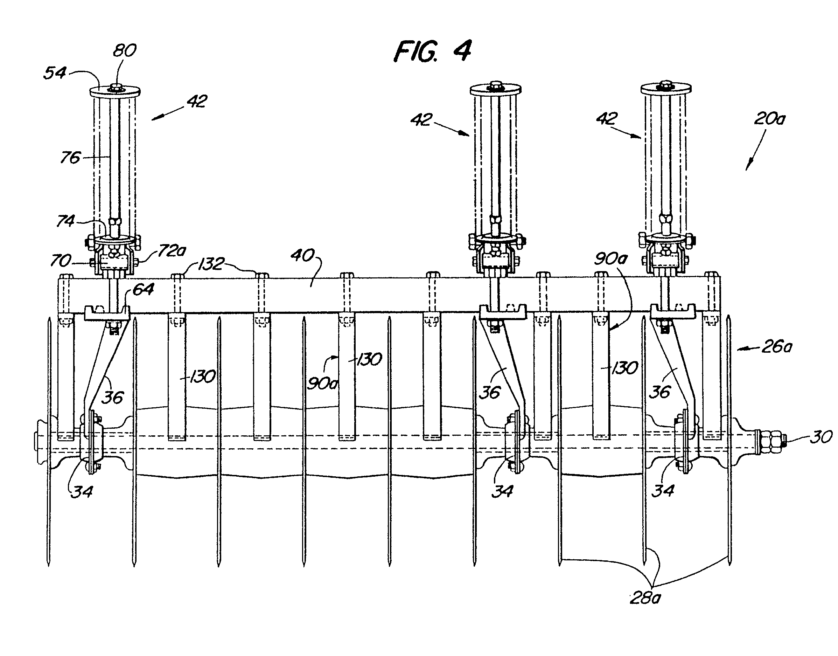

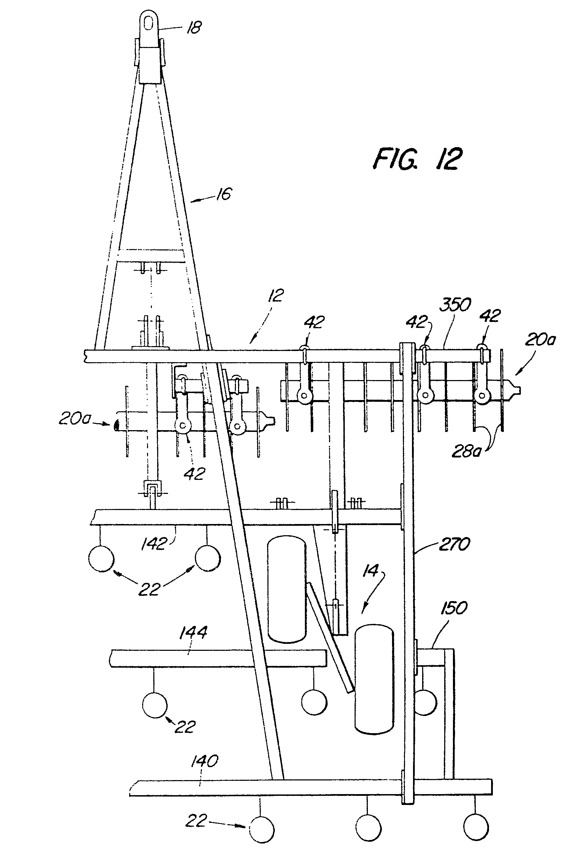

Für jeden Werkzeugsatz zur Zerkleinerung von Erntegutresten sind wenigstens 2 federnde Halterungen 42 vorgesehen. Das Satzmontagerohr 40 ist steif und starr und verteilt gleichförmig das auf das Rohr wirkende Drehmoment auf die Schwenkhalter 56. Bei längeren Sätzen 26, welche beispielsweise bis zu neun Scheiben 28 (vgl. die Figuren 4 und 12) umfassen, sind drei federnde Halterungen 42 vorgesehen.

Der nach unten gerichtete Druck wird durch Veränderung der Lage des Stiftes 72 in dem Schlitz 73 nach Fig. 3 oder dadurch eingestellt, dass mehrere Federn 76 von unterschiedlicher Federkraft vorgesehen und eine Feder mit der gewünschten Vorspannkraft ausgewählt wird.

Mehrere Schaberanordnungen 90 werden direkt von dem Satzmontagerohr 40 unterstützt, um so die Notwendigkeit zu eliminieren, eine gesonderte Montagestange oder Winkeleisen für die Schaber vorzusehen. Diese zusätzlichen Einrichtungen würden ausserdem mit dem Rahmen kollidieren und die Aushubhöhe der Sätze 76 begrenzen. Jede Schaberanordnung 90 umfasst einen Schaberarm 92, der mit den vorderen und rückwärtigen Flächen des Satzmontagerohres 40 schwenkbar verbunden ist. Eine Platte 94 ist vorgesehen, um mit dem Arm 92 an einer Stelle zu verschwenken, die von der Schwenkverbindung des Armes an der rückwärtigen Fläche aus nach rückwärts versetzt ist. Der Arm 92 erstreckt sich nach unten zu einem unteren Ende, welches eine Schaberklinge 98 nahe der konkaven Innenfläche der Scheibe 28 aufweist. Eine Feder 100 ist zwischen den entgegengesetzten Ecken von benachbarten Platten 94 eingespannt, um die Schaberklingen 98 gegen die zugehörige Scheibe 28 vorzuspannen. Die Platten 94 sind bei 102 mit Schlitzen versehen. Durch die Schlitze eingesetzte Schrauben 104, welche in das Satzrohr 40 greifen, begrenzen den Winkel, über den die Arme 92 schwenken können.

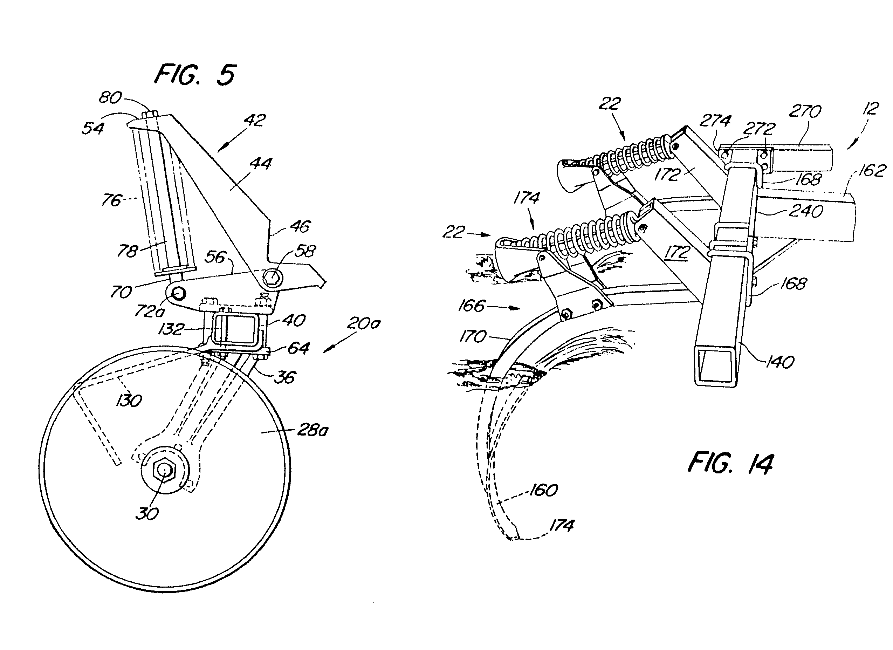

Bei dem Ausführungsbeispiel nach Fig. 1 sind die Rechteckrohre 48, an denen die federnden Halterungen 42 befestigt sind, Teil einer Anschlussstangeneinheit 110. Diese ist mit dem Hauptrahmen 12 unter einem spitzen Winkel in Bezug auf die Querrichtung verbunden, so dass der Winkel des Satzmontagerohres 40 und des Satzes 26 in Bezug auf die Querrichtung bestimmt ist. Vorzugsweise beträgt der spitze Winkel annähernd 14°. Die Montageeinheiten 110 sind an Montageplatten 114 festgeschweisst, die ihrerseits auf entgegengesetzten Seiten von sich von vorne nach hinten erstreckenden Bereichen des Hauptrahmens 12 befestigt bzw. festgeschraubt sind. Die Enden der Montageeinheiten 110, welche den nachlaufenden Enden des Satzes 20 entsprechen, sind durch L-förmige Halterungen 112 versteift, die zwischen dem Montagestangenende und einem ersten Querträger 120 verbunden sind, der sich im wesentlichen quer über die Breite des Bodenbearbeitungsgerätes erstreckt. Bei einer alternativen Ausführungsform (vgl. die Figuren 4 und 5 sowie 12 und 13) weisen die Werkzeugsätze 20a Pflugscheiben 26a statt schalenförmigen Scheibensätzen auf. Die Sätze 26a umfassen jeweils drei bis neun pflugartige Scheiben 28a. Die Satzanordnung 20a wird am vorderen Bereich des Hauptrahmens 12 so unterstützt, dass die Drehachse der Pflugscheiben 28a sich im wesentlichen parallel zur Querrichtung erstreckt. Die Stützanordnung für Pflugscheibensätze ist allgemein identisch zu derjenigen, die im Zusammenhang mit den Sätzen 20 beschrieben worden sind, so dass eine weitere detaillierte Erörterung nicht erforderlich ist. Die Schaberanordnungen 90a für die Pflugscheiben 26a umfassen L-förmige Steifen 130, die an dem Satzmontagerohr 40 durch Bolzen 132 befestigt sind. Die Streifen 130 sind zentral zwischen Scheibenpaaren 28a angeordnet, um einen Aufbau von Schmutz oder dgl. zu verhindern.

Die Bodenbearbeitungswerkzeuge 22 sind in Querrichtung in Abständen auf einem zweiten Querträger 140 angeordnet, der das rückwärtige Ende des Hauptrahmens 12 bildet. Weiterhin sind solche Werkzeuge an dritten und vierten Querträgern 142 und 144 angeordnet, die zwischen den Trägern 120 und 140 vorgesehen sind und deshalb auch als Zwischenträger bezeichnet werden. Zusätzliche Werkzeuge 22 können ausserhalb des Hauptrahmens 12 auf Verlängerungen oder Anbau-Montagerahmen 150 vorgesehen sein, die an dem Hauptrahmen 12 angeschraubt sind. Bei der bevorzugten Ausführungsform umfassen die Bodenbearbeitungswerkzeuge 22 verdrehte Messelpflugscharen 160 (Fig. 14), welche einen nach vorne gerichteten konkaven Bodengleitabschnitt aufweisen, der sich im wesentlichen über die ganze Länge der Schaufel erstreckt. Eine nähere Erläuterung einer solchen Bodenbearbeitungsschaufel 160 gibt die US-PS 42 75 792. Die Schaufel wird am unteren Ende einer federnden Aushebehalterung 166 unterstützt. Die Letztere ist mit dem Hauptrahmen 12 über U-förmige Bolzen 168 verbunden. Die Anordnung 166 umfasst einen Tragarm 170, der mit einem Haupthalter 172 schwenkbar verbunden ist. Er wird ausserdem durch eine Federanordnung 174 nach unten vorgespannt. Bei der bevorzugten Ausführungsform besitzt die Anordnung 166 eine hohe anfängliche Aushebekraft grösser als 363 kg und vorzugsweise annähernd von 545 kg. Die Aushebekraft nimmt zu, wenn der Tragarm 170 über Hindernisse nach oben in eine Zwischenstellung ausschwenkt. Von der Zwischenstellung aus bis zu einer maximal ausgehobenen Stellung nimmt dagegen die Aushebekraft wieder ab, so dass der Tragarm leicht von Hindernissen freikommt. Die in Fig. 14 gezeigte Anordnung 166 ist in einer parallel laufenden Anmeldung näher beschrieben und braucht daher hier nicht näher erläutert zu werden. Die Schaufel 160 umfasst eine untere, zentral angeordnete Spitze 174a, die dann, wenn der Hauptrahmen 12 sich in einer der Bodenbearbeitungsstellung befindet, in einer Eingriffstiefe zwischen 15 und 30 cm gehalten wird. Die Eindringtiefe der Werkzeuge 160 kann verändert werden durch Heben und Absenken des Hauptrahmens 12 auf den zugehörigen Laufradanordnungen 14, und zwar innerhalb eines vorbestimmten Höhenbereiches oberhalb der Bodenfläche. Da der Hauptrahmen 12 starr ist hebt sich auch der vordere Bereich des Rahmens oder senkt sich ab. Jedoch sorgen die federnden Halterungen 42 dafür, dass die Sätze 20 sich mit ihren Schwenkhaltern 56 entsprechend verschwenken, so dass die Werkzeuge dieser Sätze über den ganzen Schwenkbereich oder Hubbereich des Hauptrahmens 12 innerhalb des Arbeitsbereiches mit gleichbleibender Kraft in Kontakt mit dem Erdboden verbleiben. In der bevorzugten Ausführungsform können die Sätze 20 über einen Bereich von 20 cm aus der tiefsten Stellung bis in die oberste Stellung verschwenken, wenn der Einstellbereich für die Eindringtiefe der Werkzeuge 160 zwischen 5 und 25 cm liegt. Die Aushebekurve der federnden Aushebehalterungen 166, bei der das Verhältnis der maximalen Aushebekraft zu der anfänglichen Aushebekraft kleiner als etwa 1,5:1 ist, hält die Spitzen 174a der Werkzeuge 160 in der vorgesehenen Eindringtiefe, und zwar ohne unnötige Verschwenkung, wobei die Anordnung dennoch gestattet, dass die Tragarme 170 über relativ grosse Hindernisse im Notfall hinweggleiten können. Das Gewicht des Gerätes 10 wird ordnungsgemäss ausbalanciert zwischen den vorderen und rückwärtigen Bereichen des Hauptrahmens 12, so dass die nach unten gerichtete Kraft auf die Werkzeuge relativ konstant bleibt, selbst wenn die die Erntegutreste zerkleinernden Werkzeugsätze 20 über rauhes Terrain und über Hindernisse auf und ab schwenken.

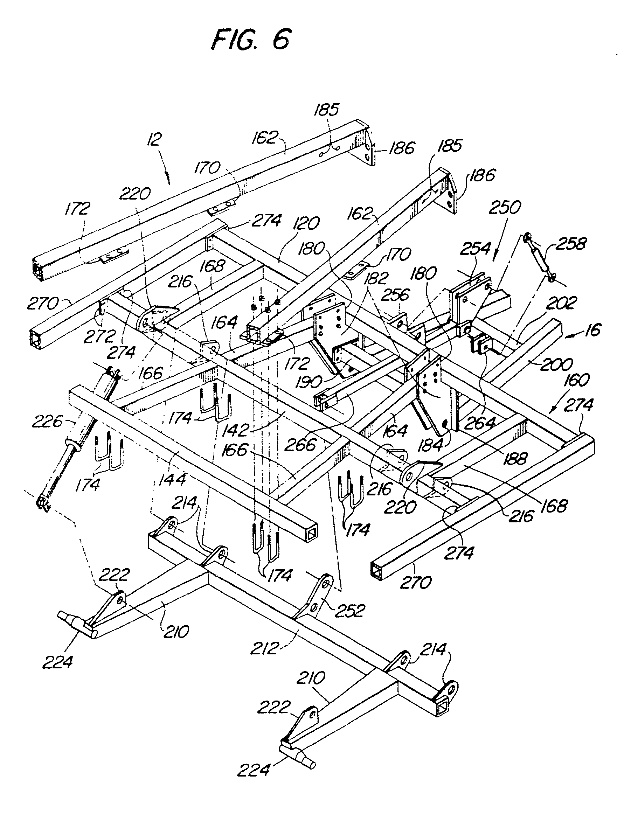

Der Hauptrahmen 12 umfasst gemäss den Figuren 1 und 6 bis 8 einen unteren starren Unterrahmen 160a nach Fig. 6 und obere, nach rückwärts divergierende Diagonalträger 162. Der Unterrahmen 160a umfasst erste, dritte und vierte Querträger 120, 142, 144, die im gegenseitigen Abstand durch zwei nach rückwärts divergierende Verbindungs- oder Längsträger 164 gehalten werden, die sich zwischen dem ersten und dem dritten Querträger 120 und 142 erstrecken, wobei ähnliche und in Fluchtung damit stehende Verbindungs- oder Längsträger 166a zwischen dem dritten und vierten Querträger 142 und 144 vorgesehen sind. Zwei zusätzliche, sich von vorne nach hinten erstreckende Träger 168a verbinden den ersten Querträger 120 mit dem dritten Querträger 142, und zwar seitlich ausserhalb der Träger 164. Die diagonalen Längsträger 162 erstrekken sich parallel und direkt in senkrechter Fluchtung über den ebenfalls divergierenden Längsträgern 164 und 166a. Vordere und rückwärtige Halter 170a und 172a sind an der Unterseite der im Querschnitt rechteckförmigen Träger 162 festgeschweisst. Zusammen mit U-förmigen Bolzen 174a ragen diese über die Träger 164 an den Verbindungsstellen mit den dritten und vierten Querträgern und den Trägern 164 und 166a, um so die diagonalen Längsträger 162 in einer überlagernden Stellung oberhalb divergierenden Träger 164 und 166 zu sichern.

Tiefliegende Deichselanlenkanordnungen 180 umfassen zwei Seitenplatten 182 auf jeder Seite der vorderen Bereiche der Verbindungslängsträger 164 und der divergierenden Längsträger 162 und erstrecken sich nach unten und nach vorne zu unteren Schwenklagerstellen 184. Bolzen sind durch Löcher in den Platten 182 und durch Löcher 185 in dem Träger 164 und den Längsträgern 162 gesteckt. An den vorderen Bereichen der diagonalen Längsträger 162 sind Platten 186 angeschweisst, die sich nach unten über die vordere Stirnfläche des Querträgers 120 erstrecken.

Sie sind an einem Winkeleisen 188 festgeschraubt, welche die vordere Fläche der Deichselanlenkung 180 bilden. Ein in Querrichtung verlaufender Verstärkungsträger 190 ist an der Innenseite der Platten 182 der Anhängung 180 unterhalb des Querträgers 120 festgeschraubt.

Die Deichsel 16 umfasst zwei nach vorne konvergierende Deichselträger 200, die mit dem Hauptrahmen 12 durch die Schwenkzapfen 184 der Anlenkanordnung 180 unterhalb der Ebene des unteren Bereiches des Teilrahmens oder Unterrahmens 160a verbunden sind. Ein die Deichsel versteifender Querträger 202 liegt zwischen den diagonalen Trägern 200, so dass die Deichsel eine allgemein A-förmige Gestalt aufweist und am vorderen Ende eine Zugverbindung 18 aufweist, die an der Spitze auf der Längsmittellinie des Hauptrahmens 12 liegt.

Die Bodenlaufräderanordnungen 14 umfassen Radtragarme nach Fig. 6, die sich nach unten und nach rückwärts von einer rechteckförmigen rohrartigen Welle 212 erstrecken, welche durch Halter 214 mit entsprechenden Haltern 216 schwenkbar verbunden sind, die an dem dritten Querträger 142 nahe den Trägern 164 und 168a angeschweisst sind und sich von dort nach vorne erstrecken. Zylindrische Verankerungen 220 sind an der Oberseite des Querträgers 142 und an der Oberseite der Träger 168a festgeschweisst. Zylindrische Halter 122 sind an den unteren Enden der Tragarme 210 nahe den Radrahmenschwenkstellen 224 festgeschweisst. Zwei hydraulische Zylinder 226 sind mit ihren Verankerungsenden an den Verankerungen 220 angeordnet, während ihre Kolbenstange mit den Zylinderhaltern 222 verbunden sind. Die Zylinder 226 sind mit einer hydraulischen Druckquelle am ziehenden Fahrzeug verbunden, so dass die Kolbenstangen ausgefahren und eingezogen werden und die Radtragarme 210 verschwenkt und die Welle 212 gehoben und gesenkt werden kann. Damit wird entsprechend auch die entsprechende Radrahmenanlenkstelle 224 gegenüber dem Hauptrahmen 12 gesenkt oder gehoben. Die Schwenklager 224 unterstützen Tragrahmen 230 für Doppelräder. Diese Rahmen divergieren von einer vorderen Stellung zwischen dem dritten und vierten Querträger 142 und 144 zu einer rückwärtigen Stellung, die rückwärts und ausserhalb des vierten Querträgers 144 liegt. Vordere und rückwärtige Laufräder 236 und 238 sind jeweils drehbar an den Enden des Tragrahmens 230 abgestützt. Die Räder können in Bezug aufeinander um das Lager 224 auf und ab schwenken. Der vierte Querträger 144 endet innerhalb der rückwärtigen Räder 238. Der zweite Querträger 140 wird hinter dem rückwärtigen Rad 238 durch Endhalter 240 gehalten, die sich von den rückwärtigen Enden der divergierenden Diagonalträger 162 nach unten erstrecken und an ihnen festgeschweisst sind. Die Oberseite des Querträgers 140 läuft allgemein parallel zum Boden der divergierenden Längsträger 162, so dass die Querträger 120, 142, 144 und 140 annähernd in der gleichen horizontalen Ebene liegen.

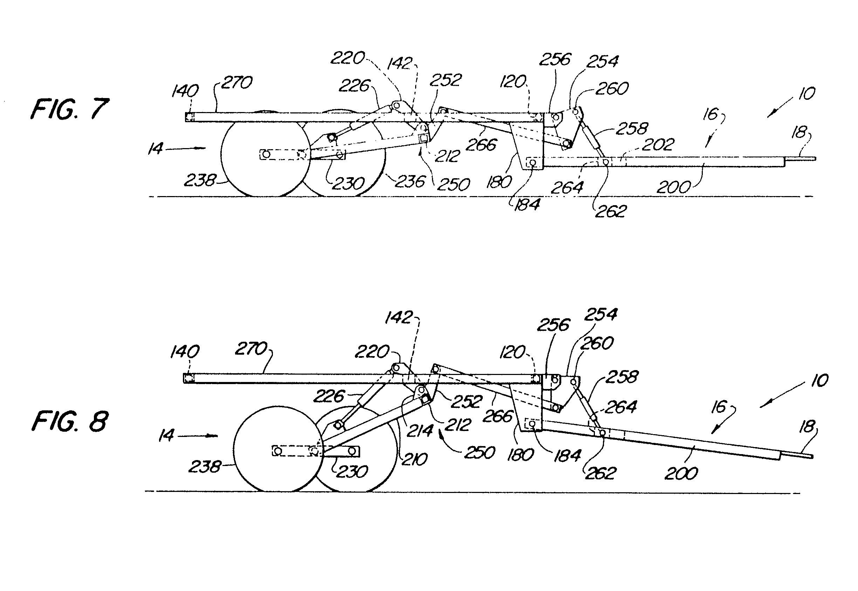

Um den Hauptrahmen 12 in einer im wesentlichen ausgerichteten horizontalen Stellung zu halten, wenn der Rahmen zwischen den Bodenbearbeitungsstellungen und einer Transportstellung auf und ab bewegt wird, ist ein Ausgleichssystem 250 gemäss Fig. 6 bis 8 vorgesehen, welches zwischen der Schwenkwelle 212 und der Deichsel 16 wirksam ist. Ein Arm 252 erstreckt sich oben und nach vorne von der Schwenkwelle 212 und ist mit dieser gemeinsam schwenkbar. Lagerplattenanordnungen 254 sind schwenkbar am vorderen Ende des Hauptrahmens 12 durch Halter 256 unterstützt, die mit dem Querträger 120 verbunden sind. Ein Spannschloss 258 ist an einem Ende mit dem oberen Bereich der Schwenkplatte 254 über einen Stift 260 verbunden. Das untere Ende des Spannschlosses ist mit einem Stift 262 am Halter 264 verbunden, der sich von dem Querträger 202 nach rückwärts erstreckt. Ein Verbindungsglied 266 ist am oberen Ende des Armes 252 und am unteren Bereich der Schwenkplatte 254 angelenkt, um die Letztere auf und ab zu schwenken, wenn die Schwenkwelle 212 durch Ausfahren und Zurückziehen der Hydraulikzylinder 226 gedreht wird. Wenn die Welle 212 zum Heben des Hauptrahmens 12 gedreht wird, ziehen die Arme 252 das Glied 266 nach rückwärts und schwenken den oberen vorderen Bereich der Platte 254 nach unten. Die Folge ist, dass das Spannschloss 258 die Deichsel 16 um die Schwenkzapfen 184 nach unten schwenkt. Wenn der Rahmen 12 abgesenkt wird, bewegen die Arme 252 das Glied 266 nach vorne, um den oberen vorderen Bereich der Platte 254 nach oben zu schwenken und die Deichsel 16 um den Zapfen 184 anzuheben. Da die Deichselverbindungsstelle 18 stets im wesentlichen in konstanter Höhenlage nach Fig. 7 und 8 verbleibt, und zwar gegenüber dem Boden unabhängig von der Stellung des Hauptrahmens 12 verändert sich nur die Anlenkstelle der Deichsel gegenüber dem Boden in Abhängigkeit von den Bewegungen des Hauptrahmens, so dass der Hauptrahmen 12 stets in der gleichen ausgerichteten Stellung verbleibt. Das Spannschloss 258 kann zur anfänglichen Ausrichtung des Hauptrahmens 12 verstellt werden. Keine weiteren Einstellungen sind für die Ausrichtung des Hauptrahmens und des Gerätes 10 erforderlich. Im wesentlichen liegen alle zum Anheben und Absenken des Hauptrahmens dienenden Einrichtungen und Ausgleichsanordnungen oberhalb der Oberseite des Hauptrahmens 12.

Wie am besten aus Fig. 1 ersichtlich ist, liegen die divergierenden Träger 200 der Deichsel parallel zu den Achsen der divergierenden Diagonalträger 162, um so die Kräfte entlang der Hauptträger und der Elemente des Hauptrahmens 12 zu verteilen. Dazu gehören die Diagonalträger 162 und die Verbindungsträger 164 und 166a des Unterrahmens 160. Die divergierenden Träger 162 liefern zusätzliche Festigkeit, ohne den Freiraum unterhalb des Hauptrahmens zu verringern und ohne den Bereich zu begrenzen, über den die Sätze 20 nach oben ausschwenken können.

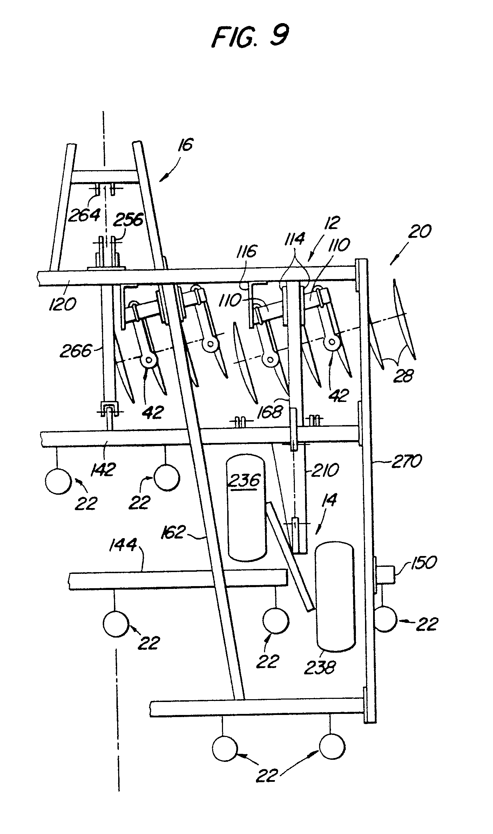

Von vorne nach hinten ragende Seitenrahmenelemente 270 sind mit den Querträgern 120, 142 und 140 über Bolzen 272 (Fig. 6 und 14) verbunden, die sich durch entsprechende Platten 274 erstrecken, die an den Enden der Träger angeschweisst sind. Bei der Ausführungsform nach Fig. 1 sind die Montagestangeneinheiten für die äussersten, die Erntegutreste zerkleinernden Sätze 20 an den Seitenrahmengliedern 270 angeschraubt. Verlängerungsrahmen 150 an dem rückwärtigen Teil des Hauptrahmens 12 sind ebenfalls mit den Trägern 270 verbunden. Die Montagestangeneinheiten 110 für die innersten Sätze 20 sind mit den diagonal verlaufenden Trä-, gern 164 des Unterrahmens 160 verbunden. Wie aus Fig. 1 hervorgeht, ist eine Kombination eines Fünfscheibensatzes und eines Sechsscheibensatzes auf jeder Hälfte des Hauptrahmens verwendet. Es können aber unterschiedliche Kombinationen mit unterschiedlichen Arbeitsbreiten an dem Rahmen montiert werden, um die wirksame Arbeitsbreite zu verändern. Beispielsweise zeigt Fig. 9 einen Satz mit vier Scheiben und einen Satz mit sechs Scheiben, wobei die Montagestangeneinheiten 160 an dem von vorne nach hinten ragenden Träger 168a befestigt sind, um eine schmalere wirksame Breite gegenüber der Anordnung nach Fig. 1 zu erhalten. Der Verlängerungsrahmen 150 ist nach Fig. 9 ein einziger Anbaustangenteil, der ein Bodenbearbeitungswerkzeug 22 hinter den äussersten Scheiben 28 trägt.

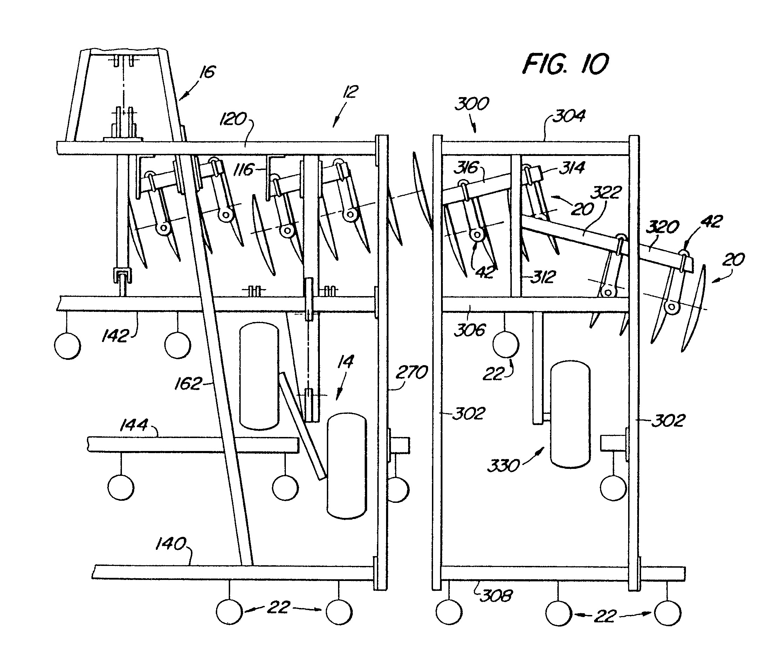

Figur 10 zeigt eine Mittelrahmenausbildung ähnlich der nach Fig. 9, an der jedoch ein Auslegerrahmen 300 gelenkig angebracht ist, der so angeordnet ist, dass er gegenüber dem Hauptrahmen 12 durch übliche Faltgelenkanordnungen verschwenkt werden kann (nicht gezeigt). Der Auslegerarm 300 umfasst von vorne nach hinten ragende Seitenträger 302, die durch Querträger 304, 306 und 308 verbunden sind, welche im wesentlichen mit den Querträgern 120, 142 und 140 des Hauptrahmens jeweils in Fluchtung stehen. Ein Träger 312 erstreckt sich in Richtung von vorne nach hinten zwischen den Trägern 304 und 306 und unterstützt eine Montagestangeneinheit 314 und das eine Ende einer Stange 316. Das entgegengesetzte Ende der Stange 316 ist an dem Träger 302 angebracht. Ein Satz mit vier Scheiben ist den den Trägern 314 und 316 unter einem spitzen Winkel zur Querrichtung angeordnet. Ein weiterer Vierscheibensatz ist mit der Stangeneinheit 320 und dem Querglied 322 verbunden, das an dem äusseren Rahmen 303 angebracht ist. Um die Seitenkräfte an dem Auslegerarm 300 gering zu halten sind die Sätze 20 unter entgegengesetzten Winkeln in Bezug auf die Querrichtung angeordnet. Vorzugsweise ist der Winkel jedes Satzes gegenüber der Querrichtung etwa 14°.

Der Auslegerarm 300 umfasst ein getrenntes Bodentastrad 300 um den Auslegerrahmen in dem gewünschten Abstand oberhalb der Bodenoberfläche zu halten.

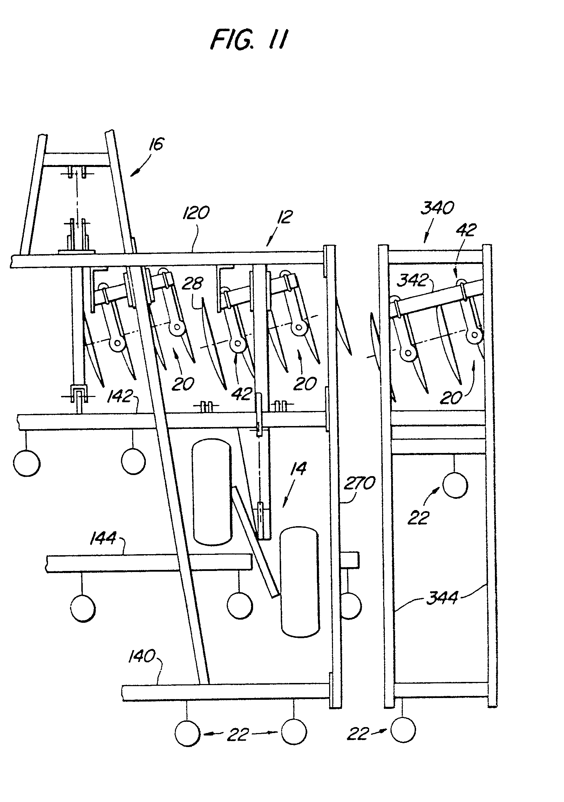

Bei der Ausführungsform nach Fig. 11 ist ein Auslegerrahmen 340 am Hauptrahmen 12 durch Faltgelenke angebracht. Das Faltgelenk ist gesperrt, um den Auslegerrahmen 340 in gleicher Fluchtungslage mit dem Hauptrahmen 12 während der Arbeitsphase zu halten. Eine Gesamtheit von 13 Scheiben 28 sind in Querrichtung in Abständen auf drei Sätzen 20 verteilt. Der Werkzeugsatz des Auslegers wird von einem Querglied 342 unterstützt, das zwischen zwei in Querrichtung im Abstand liegenden Längsträgern 344 abgestützt ist, die parallel und in gleicher Länge zu den Rahmenträgern 270 verlaufen.

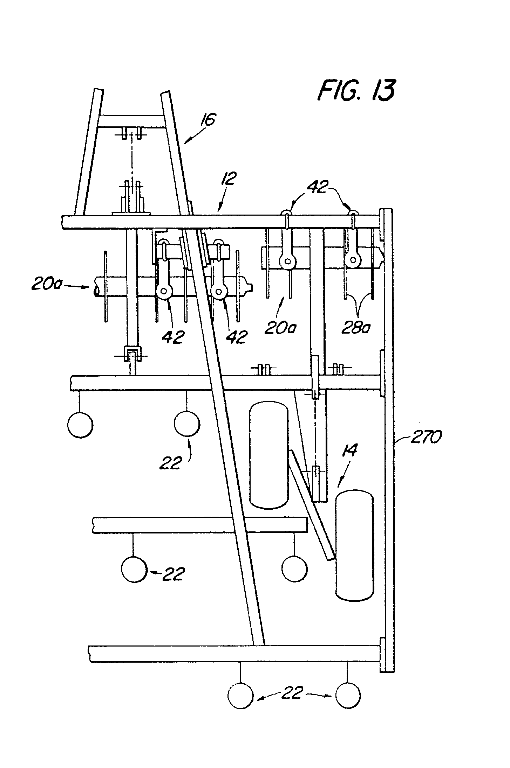

Bei der Ausführungsform nach Fig. 12 sind Sätze 20a von insgesamt neun Pflugscheiben vom Hauptrahmen 12 und von einem langen Montagerahmen 350 am Ausleger 260 unterstützt. Die Ausführung nach Fig. 12 verdeutlicht die Verwendung von drei federnden Halteeinrichtungen 42 bei grossen Sätzen. Figur 13 zeigt eine Anordnung ähnlich der nach Fig. 12, wobei jedoch eine schmalere wirksame Arbeitsbreite mit weniger Pflugscheiben erreicht wird, die in Abständen auf jeder Hälfte des vorderen Bereichs des Rahmens angeordnet sind. Es ist kein Verlängerungsrahmen oder äusserer Anbausatz erforderlich, um die Bodenbearbeitungswerkzeuge 12 bei der Anordnung nach Fig. 13 zu befestigen.

Es ist aus den Figuren 1 und 9 bis 13 ersichtlich, dass zahlreiche verschiedene Feldarbeitsbreiten durch Verwendung unterschiedlicher Kombinationen von Werkzeugsatzweiten erreicht werden kann. Diese Ausführungen sind lediglich beispielsweise gezeigt, um die vielfältige Verwendbarkeit des Bodenbearbeitungsgerätes nach der Erfindung zu verdeutlichen. Eine Einschränkung der Erfindung soll dadurch nicht gegeben sein.

Wie am besten aus Figur 1 hervorgeht, ist der Satz 20 von Erntegutreste zerkleinernden Werkzeugen und die Bodenbearbeitungswerkzeuge 22 im wesentlichen symmetrisch in Bezug auf die von vorne nach hinten ragende Längsmittellinie des Bodenbearbeitungsgerätes 10 angeordnet. In der gezeigten Ausführungsform erstrecken sich zwei Erdbearbeitungswerkzeuge 22 von dem dritten Querträger 142 nach rückwärts, und zwar zwischen den divergierenden Längsträgern 162. Nur ein einziges Erdbearbeitungswerkzeug 22 ist zwischen den Querträgern 140 und 144 im rückwärtigen Bereich des Hauptrahmens 12 zentral vorgesehen. Ein allgemein offener, leicht zugänglicher Raum ist dadurch zwischen den Querträgern 140 und 144 geschaffen, und zwar innerhalb der Diagonalträger 162. Die am weitesten innen liegenden Werkzeuge 22 an dem rückwärtigen Querträger 140 sind in einem Abstand im wesentlichen gleich dem Abstand zwischen dem rückwärtigen und den divergierenden Trägern angeordnet, um einen bequemen Zugang zu dem Raum zwischen den Diagonalträgern 162 zu schaffen. Gewichte 350a können dem rückwärtigen Abschnitt der Diagonalträger 162 angefügt oder von diesen abgenommen werden, um so den nach unten gerichteten Druck auf die einzelnen Werkzeuge 22 zu vergrössern oder zu verkleinern. Wie am besten aus Fig. 15 hervorgeht, sind die Gewichte 350 typische, aktenkoffergrosse Gewichte, die direkt an den Diagonalträgern 162 angehängt sind und sich von diesen nach innen in den zugehörigen freien Raum erstrecken. Aufgrund der Tatsache, dass der zentrale rückwärtige Bereich des Bodenbearbeitungsgerätes 10 relativ wenig besetzt ist mit Werkzeugen 22, können die Gewichte 350 leicht zugefügt oder abgenommen werden in Abhängigkeit von unterschiedlichen Bodenbeschaffenheiten.Die federnden Halterungen 42 für die die Erntegutreste oder dgl. zerkleinernden Werkzeuge halten allgemein einen konstanten, nach unten gerichteten Druck auf die Sätze 26 aufrecht, die so gleichförmig gegen den Boden drücken, und zwar unabhängig von der Anzahl der Gewichte 350, die an dem Rahmen 12 angehängt oder abgenommen sind.

## Patentansprüche

1. Bodenbearbeitungsgerät mit einem allgemein rechteckförmigen Hauptrahmen (12) und vorderen und rückwärtigen, quer verlaufenden Werkzeugtrageinrichtungen (48, 110; 140–144), bei dem mehrere in Querrichtung im Abstand angeordnete Sätze (20) mit die Erntegutreste zerkleinernden Werkzeugen (28) schwenkbar an den vorderen Trageinrichtungen (48, 110) und hinter diesen mehrere pflugscharähnliche Werkzeuge (22), die zur Bearbeitung des Bodens innerhalb eines vorbestimmten Tiefenbereiches dienen, an den rückwärtigen Trageinrichtungen (140–144) angeordnet sind, dadurch gekennzeichnet, dass die vorderen Werkzeugsätze (20) je für sich gegenüber dem Hauptrahmen (12) auf- und abschwenkbar und jeweils mit einer Vorspanneinrichtung (76) zum Erzeugen eines konstanten, nach unten gerichteten Vorspanndruckes auf die Werkzeuge (28) ausgerüstet sind, dass die pflugscharähnlichen Werkzeuge (22) an dem Hauptrahmen (12) so angeordnet sind, dass ihre Arbeitstiefe von der Höhenlage des Hauptrahmens (12) über der Bodenoberfläche abhängig ist, und dass die Anordnung einmal so getroffen ist, dass die die Erntegutreste zerkleinernden Werkzeuge (28) von der Höhenlage des Hauptrahmens (12) über der Bodenoberfläche unabhängig mit im wesentlichen gleichbleibender Vorspannung am Boden angreifen, und zum anderen so, dass der wirksame Vorspannbereich der Vorspanneinrichtung (76) für die vorderen Werkzeugsätze (20) dem Arbeitstiefenbereich der rückwärtigen Werkzeuge (22) entspricht.

2. Bodenbearbeitungsgerät nach Anspruch 1, dadurch gekennzeichnet, dass jeder vordere Werkzeugsatz (20) ein quer verlaufendes Tragglied (40) aufweist, an dem das obere Ende eines Armes (36) befestigt ist, der sich vom Tragglied (40) nach unten und nach hinten erstreckt und an seinem unteren Ende den Werkzeugsatz (20) drehbar unterstützt, dass das Tragglied (40) seinerseits mittels eines Schwenkhalters (56) unten an einem Montageteil (44) der vorderen Werkzeugtrageinrichtung (48, 110) um eine Querachse (58) schwenkbar abgestützt ist, und dass die Vorspanneinrichtung (76) in Abstand von der Querachse (58) auf den Schwenkhalter (56) einwirkt.

3. Bodenbearbeitungsgerät nach Anspruch 2, dadurch gekennzeichnet, dass jedem mindestens drei Werkzeugscheiben (28) umfassenden vorderen Werkzeugsatz (20) wenigstens zwei im gegenseitigen Abstand am Tragglied (40) starr befestigte Arme (36) mit Schwenkhalter (56) und Vorspanneinrichtung (76) zugeordnet sind, und das als starrer Hohlkörper ausgebildete Tragglied (40) mit den beiden Armen (36) eine starre Baueinheit bildet, die um die Querachse (58) der Schwenkhalter (56) an den Montageteilen (44) der vorderen Werkzeugtrageinrichtung schwenkbar ist.

4. Bodenbearbeitungsgerät nach Anspruch 3, dadurch gekennzeichnet, dass sich jeder Schwenkhalter (56) von seiner Querachse (58) nach rückwärts erstreckt und das Tragglied (40) mit dem Schwenkhalter (56) an einer Stelle hinter der Querachse (58) verbunden ist und dass die Vorspanneinrichtung (76) eine hinter der Querachse (58) auf den Schwenkhalter (56) nach unten vorspannend einwirkende Feder aufweist.

5. Bodenbearbeitungsgerät nach einem der Ansprüche 2 bis 4, dadurch gekennzeichnet, dass einem jedem Werkzeug (28) des vorderen Werkzeugsatzes (20) zugeordneter Schaber (98) mittels eines Armes (92) am dem Tragglied (40) zur gemeinsamen Verschwenkung mit diesem befestigt ist.

6. Bodenbearbeitungsgerät nach einem der Ansprüche 2 bis 5, dadurch gekennzeichnet, dass das Montageteil (44) an einem Träger (48) der vorderen Werkzeugtrageinrichtung (48, 110) befestigbar ist und im Abstand hinter der Anlenkachse (58) und oberhalb dieser ein Widerlager (54) für eine Feder der Vorspanneinrichtung (76) aufweist.

7. Bodenbearbeitungsgerät nach einem des Ansprüche 4 bis 6, dadurch gekennzeichnet, dass die Vorspanneinrichtung (76) ein den Schwenkbereich des Schwenkhalters (56) nach unten begrenzendes Anschlagglied (78) aufweist.

8. Bodenbearbeitungsgerät nach einem der Ansprüche 2 bis 7, dadurch gekennzeichnet, dass der vertikale Arbeits-Schwenkbereich des vorderen Werkzeugsatzes (20) wenigstens etwa 20 cm beträgt.

9. Bodenbearbeitungsgerät nach einem der Ansprüche 1 bis 8, dadurch gekennzeichnet, dass der sich von seiner Querachse (58) nach rückwärts erstreckende Schwenkhalter (56) in Bezug auf die Angriffsstelle der Vorspanneinrichtung (76) so angeordnet ist, dass die wirksame Länge seines Federarmes zur Erzeugung einer von der Schwenkbewegung des Werkzeugsatzes (20) gegenüber dem Hauptrahmen (12) unabhängigen konstanten Vorspannkraft mit dem Verschwenken des Tragteils (40) ändert.

10. Bodenbearbeitungsgerät nach Anspruch 9, dadurch gekennzeichnet, dass jeder vordere Werkzeugsatz (20) eine Drehachse (30) aufweist, die gegenüber der Anlenkachse (58) des Halters (56) nach rückwärts versetzt angeordnet ist.

11. Bodenbearbeitungsgerät nach Anspruch 9, dadurch gekennzeichnet, dass die unter dem Träger (48) der vorderen Werkzeugtrageinrichtung angeordnete Querachse (58) des Schwenkhalters (56) oberhalb und vor dem Tragglied (40) und dieses wiederum vor und oberhalb einer Drehachse (30) des vorderen Werkzeugsatzes (20) angeordnet sind.

12. Bodenbearbeitungsgerät nach einem der Ansprüche 2 bis 11, dadurch gekennzeichnet, dass stangenförmige Träger (48, 110) der vorderen Trageinrichtung mittels Halterungen (50, 116) an auswählbaren Stellen des Hauptrahmens (12) bzw. etwaiger Ergänzungsrahmen (300) und in auswählbarer Neigung zur Querrichtung des Hauptrahmens (12) befestigbar sind.

13. Bodenbearbeitungsgerät nach Anspruch 1, dadurch gekennzeichnet, dass Zusatzgewichte (350) im rückwärtigen Bereich des Hauptrahmens (12) so anbringbar sind, dass sie die Vorspannkraft der Vorspanneinrichtung (76) der vorderen Werkzeugsätze (20) nicht beeinflussen.

14. Bodenbearbeitungsgerät nach Anspruch 13, dadurch gekennzeichnet, dass zwei nach rückwärts divergierende Längsträger (162) des Hauptrahmens (12) in deren rückwärtigen Bereich einen Freiraum mit Trageinrichtungen für die Zusatzgewichte (350) aufweisen.

15. Bodenbearbeitungsgerät nach Anspruch 1, dadurch gekennzeichnet, dass der allgemeine rechteckförmige Hauptrahmen (12) starr ausgebildet und mit einer Zugdeichsel (16) und zwei Laufradanordnungen (14) im Bereich der rückwärtigen Trageinrichtung (140–144) versehen ist, die jeweils in einer senkrechten Ebene gegenüber dem Hauptrahmen (12) zwischen einer Transportstellung des Hauptrahmens (12) und mehreren Arbeitsstellungen in unterschiedlicher Höhenlage mittels einer Hubeinrichtung (226) verschwenkbar ist, welche über ein Ausgleichsgestänge (250) mit der Deichsel (16) so verbunden ist, dass der Hauptrahmen (12) in jeder Stellung innerhalb des Arbeitstiefenbereiches der rückwärtigen Werkzeuge eine allgemeine horizontale Lage beibehält.

**Revendications**

1. Machine pour le travail du sol comportant un châssis principal (12) de forme générale rectangulaire et des dispositifs porte-outils avant et arrière orientés transversalement (48, 110; 140–144), dans laquelle plusieurs jeux (20) écartés dans le sens transversal, munis d'outils (28) réduisant ou broyant les restes de produits de récolte, sont montés de façon pivotante sur les dispositifs de support avant (48, 110), tandis que derrière ceux-ci plusieurs outils (22) analogues à des socs ou cultivateurs, servant à travailler le sol dans une gamme de profondeur déterminée sont montés sur les dispositifs de support arrière (140–144), caractérisée en ce que les jeux d'outils avant (20) sont montés chacun de façon à pouvoir pivoter vers le haut et vers le bas par rapports au châssis principal (12) et sont équipés chaque fois d'un dispositif de sollicitation (76) servant à exercer une pression de sollicitation constante dirigée vers le bas sur les outils (28), en ce que les outils (22) en forme de cultivateurs sont montés sur le châssis principal (12) de façon telle que leur profondeur de travail dépende de la position en hauteur du châssis principal (12) audessus de la surface du sol, et en ce que l'agencement est étudié d'une part de façon telle que les outils (28) réduisant ou broyant les produits de récolte attaquent le sol avec une sollicitation ou précontrainte en principe constante indépendamment de la position en hauteur du châssis principal (12) au-dessus de la surface du sol, et d'autre part de façon telle que la plage de sollicitation effective du dispositif de sollicitation (76) destiné aux jeux d'outils avant (20) corresponde à la gamme de profondeur de travail des outils arrière (22).

2. Machine pour le travail du sol suivant la revendication 1, caractérisée en ce que chaque jeu d'outils avant (20)comporte un organe de support (40) s'étendant transversalement, sur lequel est fixée l'extrémité supérieure d'un bras (36) qui s'étend vers le bas et vers l'arrière depuis l'organe de support (40) et qui supporte le jeu d'outils (20) de façon rotative à son extrémité inférieure, en ce que l'organe de support (40) est de son côté soutenu de façon pivotante au moyen d'une console pivotante (56) au-dessous d'une pièce de montage (44) du dispositif porte-outils avant (48, 110), afin de pouvoir pivoter autour d'un axe transversal (58), et en ce que le dispositif de sollicitation (76) agit sur la console pivotante (56) à une certaine distance de l'axe transversal(58).

3. Machine pour le travail du sol suivant la revendication 2, caractérisée en ce qu'il est prévu pour chaque jeu d'outils (20) avant comportant au moins trois disques formant outils (28) au moins deux bras (36) fixés rigidement selon un écartement relatif sur l'organe de support (40) muni de consoles pivotantes (56) et d'un dispositif de sollicitation (76), et en ce que l'organe de support (40), se présentant sous la forme d'un corps creux rigide, forme avec les deux bras (36) un ensemble unitaire rigide qui peut pivoter autour de l'axe transversal (58) des consoles pivotantes (56) sur les pièces de montage (44) du dispositif porte-outils avant.

4. Machine pour le travail du sol suivant la revendication 3, caractérisée en ce que chaque console pivotante (56) s'étend vers l'arrière depuis son axe transversal (58), en ce que l'organe de support (49) est relié à la console pivotante (56) en un point situé derrière l'axe transversal (58), et en ce que le dispositif de sollicitation (76) comporte un ressort agisant pour exercer une sollicitation en direction du bas sur la console pivotante (56) en arrière de l'axe transversal (58).

5. Machine pour le travail du sol suivant l'une quelconque des revendications 2 à 4, caractérisée en ce qu'un élément racleur (98) associé à chaque outil (28) du jeu d'outils avant (20) est fixé au moyen d'un bras (92) sur l'organe de support (40) afin de pouvoir pivoter avec celui-ci.

6. Machine pour le travail du sol suivant l'une quelconque des revendications 2 à 5, caractérisée en ce que la pièce de montage (44) peut être fixée sur un support (48) du dispositif porte-outils avant (48, 110) et comporte, à une certaine distance en arrière de l'axe d'articulation (58) et au-dessus de celui-ci, une portée (54) destinée à un ressort du dispositif de sollicitation (76).

7. Machine pour le travail du sol suivant l'une quelconque des revendications 4 à 6, caractérisée en ce que le dispositif de sollicitation (76) comporte un élément formant butée (78) limitant vers le bas la course de pivotement de la console pivotante (56).

8. Machine pour le travail du sol suivant l'une quelconque des revendications 2 à 7, caractérisée en ce que la course de pivotement verticale lors du travail du jeu d'outils avant (20) représente au moins 20 cm environ.

9. Machine pour le travail du sol suivant l'une quelconque des revendications 1 à 8, caractérisée en ce que la console pivotante (56) s'étendant vers l'arrière à partir de son axe transversal (58) est disposée par rapport au point d'attaque du dispositif de sollicitation (76) de telle sorte que la longueur efficace de son bras de ressort servant à engendrer une force de sollicitation constante indépendante du mouvement de pivotement du jeu d'outils (20) par rapport au châssis principal (12) varie avec le pivotement de l'organe de support (40).

10. Machine pour le travail du sol suivant la revendication 9, caractérisée en ce que chaque jeu d'outils avant (20) comporte un axe de rotation (30) qui est décalé vers l'arrière par rapport à l'axe d'articulation (58) de la console (56).

11. Machine pour le travail du sol suivant la revendication 9, caractérisée en ce que l'axe transversal (58) de la console pivotante (56), disposé au-dessous du support (48) du dispositif porte-outils avant, se trouve au-dessus et en avant de l'organe de support (40), celui-ci étant disposé à son tour en avant et au-dessus d'un axe de rotation (30) du jeu d'outils avant (20).

12. Machine pour le travail du sol suivant l'une quelconque des revendications 2 à 11, caractérisée en ce que des supports en forme de barres (48, 110) du dispositif de support avant peuvent être fixés au moyen de brides (50, 116) en des points choisis du châssis principal (12) ou de châssis complémentaires éventuels (300) et dans une position d'inclinaison choisie par rapport à la direction transversale du châssis principal (12).

13. Machine pour le travail du sol suivant la revendication 1, caractérisée en ce que des contrepoids supplémentaires (350) peuvent être adaptés dans la partie arrière du châssis principal (12) de façon telle que la force de sollicitation du dispositif de sollicitation (76) du jeu d'outils avant (20) ne soit pas influencée.

14. Machine pour le travail du sol suivant la revendication 13, caractérisée en ce que deux longerons (162) du châssis principal (12), allant en divergeant vers l'arrière, ménagent dans leur partie arrière un espace libre avec des dispositifs de support destinés aux contrepoids supplémentaires (300).

15. Machine pour le travail du sol suivant la revendication 1, caractérisée en ce que le châssis principal (12), ayant d'une façon générale une forme rectangulaire, est rigide et est muni d'une flèche d'attelage (16) et de deux systèmes de roues porteuses (14) au voisinage du dispositif de support arrière (140–144), qui peut pivoter chaque fois dans un plan vertical par rapport au châssis principal (12) entre une position de transport du châssis principal (12) et plusieurs positions de travail situées à des hauteurs différentes sous l'action d'un dispositif de relevage (226), qui est relié par une timonerie compensatrice (250) à la flèche d'attelage (16) de façon telle que le châssis principal (12) conserve une position générale horizontale dans chaque position à l'intérieur de la gamme de profondeurs de travail des outils arrière.

**Claims**

1. A ground cultivating implement comprising a generally rectangular main frame (12) and forward and rearward, transversely extending tool carrier means (48, 110; 140–144), in which a plurality of transversely spaced-apart sets (20) with tools (28) for cutting up the crop residue are disposed pivotably on the forward carrier means (48, 110) and rearwardly thereof a plurality of ploughshare-like tools (22) which serve for tilling the ground within a predetermined region in respect of depth are disposed on the rearward carrier means (140–144), characterised in that the forward tool sets (20) are each capable of being pivoted up and down independently relative to the main frame (12) and are each provided with a prestressing means (76) for producing a constant, downwardly directed prestressing pressure on the tools (28), that the ploughshare-like tools (22) are so arranged on the main frame (12) that their operating depth is dependent on the position in respect of height of the main frame (12) above the surface of the ground, and that the arrangement is such on the one hand that the tools (28) for cutting up the crop residue engage the ground with a substantially uniform prestressing independently of the position in respect of height of the main frame (12) above the surface of the ground, and on the other hand that the effective prestressing range of the prestressing means (76) for the forward tool sets (20) corresponds to the range of operating depth of the rearward tools (22).

2. A ground cultivating implement according to claim 1 characterised in that each forward tool set (20) has a transversely extending carrier member (40) to which the upper end of an arm (36) is secured, the arm (36) extending downwardly and rearwardly from the carrier member (40) and at its lower end rotatably supporting the tool set (20), that the carrier member (40) is in turn supported pivotably about a transverse axis (58) by means of a pivotal holder (56) at the underneath of a mounting member (44) of the forward tool carrier means (48, 110), and that the prestressing means (76) acts on the pivotal holder (56) at a spacing from the transverse axis (58).

3. A ground cultivating implement according to claim 2 characterised in that associated with each forward tool set (20) which includes at least three tool discs (28) are at least two arms (36) which are rigidly fixed to the carrier member (40) at a spacing from each other, with pivotal holder (56) and prestressing means (76), and the carrier member (40) which is in the form of a rigid hollow member, with the two arms (36), forms a rigid structural unit which is pivotable about the transverse axis (58) of the pivotal holder (56) on the mounting members (44) of the forward tool carrier means.

4. A ground cultivating implement according to claim 3 characterised in that each pivotal holder (56) extends rearwardly from its transverse axis (58) and the carrier member (40) is connected to the pivotal holder (56) at a location behind the transverse axis (58), and that the prestressing means (76) has a spring which acts with a downward prestressing force on the pivotal holder (56) rearwardly of the transverse axis (58).

5. A ground cultivating implement according to one of claims 2 to 4 characterised in that a scraper (98) associated with each tool (28) of the forward tool set (20) is fixed by means of an arm (92) to the carrier member (40) for joint pivotal movement therewith.

6. A ground cultivating implement according to one of claims 2 to 5 characterised in that the mounting member (44) can be fixed to a carrier (48) of the forward tool carrier means (48, 110) and at a spacing rearwardly of the pivot axis (58) and above same has a support means (54) for a spring of the prestressing means (76).

7. A ground cultivating implement according to one of claims 4 to 6 characterised in that the prestressing means (76) has an abutment member (78) for limiting the range of pivotal movement of the pivotal holder (56) in a downward direction.

8. A ground cultivating implement according to one of claims 2 to 7 characterised in that the vertical range of operating pivotal movement of the forward tool set (20) is at least about 20 cm.

9. A ground cultivating implement according to one of claims 1 to 8 characterised in that the pivotal holder (56) which extends rearwardly from its transverse axis (58) is so arranged with respect to the point of egangement of the prestressing means (76) that the effective length of its spring arm varies with the pivotal movement of the carrier member (40) in order to produce a constant prestressing force which is independent of the pivotal movement of the tool set (20) relative to the main frame (12).

10. A ground cultivating implement according to claim 9 characterised in that each forward tool set (20) has an axis of rotation (30) which is disposed at a rearwardly displaced position with respect to the pivot axis (58) of the holder (56).

11. A ground cultivating implement according to claim 9 characterised in that the transverse axis (58) of the pivotal holder (56), which axis is arranged beneath the carrier (48) of the forward tool carrier means, is arranged above and in front of the carrier member (40) and the latter is in turn arranged in front of and above an axis of rotation (30) of the forward tool set (20).

12. A ground cultivating implement according to one of claims 2 to 11 characterised in that bar carriers (48, 110) of the forward carrier means can be secured by way of holding means (50, 116) to selectible locations on the main frame (12) or an optional supplement frame (30) and at a selectible angle of inclination with respect to the transverse direction of the main frame (12).

13. A ground cultivating implement according to claim 1 characterised in that additional weights (350) may be mounted in the rearward region of the main frame (12) in such a way that they do not affect the prestressing force of the prestressing means (76) of the forward tool sets (20).

14. A ground cultivating implement according to claim 13 characterised in that two rearwardly diverging longitudinal carriers (162) of the main frame (12) are provided in the rearward region thereof with a free space with carrier means for the additional weights (350).

15. A ground cultivating implement according to claim 1 characterised in that the generally rectangular main frame (12) is rigid and is provided with a tow bar arrangement (16) and two support wheel assemblies (14) in the region of the rearward carrier means (140–144), which are respectively pivotable in a vertical plane with respect to the main frame (12) between a transportation position of the main frame (12) and a plurality of operating positions at different heights, by means of a lift arrangement (226) which is so connected to the tow bar arrangement (16) by way of a compensating linkage (250) that the main frame (12) remains in a generally horizontal condition in any position within the range of operating depth of the rearward tools.

FIG. 15

FIG. 1

FIG. 2

FIG. 3

0 089 053

FIG. 4

FIG. 14

FIG. 5

FIG. 6

FIG. 7

FIG. 8

23

FIG. 9

FIG. 10

9 / 11

## FIG. 11

10 / 11

FIG. 12

II / II

FIG. 13

16

12

42

20a

42   42   20a   28a

22

22

14

270

22